# EUROPEAN PATENT APPLICATION

(11) **EP 4 614 593 A1**
(43) Date of publication of application: **10.09.2025**
(21) Application number: 23885992.0
(22) Date of filing: 07.09.2023
(51) Int. Cl.: H01M 4/36, H01M 4/525, H01M 4/485, C01G 53/00, H01M 10/052, H01M 4/02

(54) **POSITIVE ELECTRODE ACTIVE MATERIAL, METHOD FOR PREPARING SAME, AND LITHIUM SECONDARY BATTERY COMPRISING SAME POSITIVE ELECTRODE ACTIVE MATERIAL**

(30) Priority: 31.10.2022 KR 20220143056
(71) Applicant: SM Lab Co., Ltd., Ulsan 44953 (KR); VOLKSWAGEN AKTIENGESELLSCHAFT, 38440 Wolfsburg (DE)
(72) Inventor: KIM, Jun Hyeok, Ulsan 44656 (KR); CELASUN, Yagmur, 38106 Braunschweig (DE); ZHAO, Wenjiao, 38124 Braunschweig (DE)
(74) Representative: Loyer & Abello
(86) International application number: PCT/KR2023/013451
(87) International publication number: WO 2024/096295

(57) **Abstract**

Provided are a cathode active material, a method of preparing the same, and a secondary battery including the same, the cathode active material including a lithium nickel-based transition metal oxide particle including 96 mol% or more of nickel, not including manganese, including from 400 ppm to less than 1,000 ppm of titanium (Ti) substituted at transition metal sites within a crystal structure, and including a concentration gradient region in which respective concentrations of aluminum (Al) and cobalt (Co) atoms each change from a surface of the particle toward a center of the particle, and wherein, in the concentration gradient region, an absolute value (A) of a slope of the cobalt atom concentration change and an absolute value (B) of a slope of the aluminum atom concentration change satisfy A > B.

## Description

### Technical Field

The present disclosure relates to a cathode active material for use in a lithium secondary battery, and a method of preparing the cathode active material.

### Background Art

Since lithium secondary batteries were commercialized by Sony in 1991, demand has drastically increased in various fields, ranging from small household appliances such as mobile IT products, to medium- and large-sized electric vehicles and energy storage systems. In particular, for medium- and large-sized electric vehicles and energy storage systems, low-cost and high-energy cathode materials are essential. However, cobalt, which is the main raw material of single-crystal LiCoO₂ (LCO), a currently commercialized cathode active material, is expensive.

Accordingly, instead of using LCO, Ni-based cathode active materials denoted by LiNiₓCo_{y}Mn_{z}O₂ (NCM, where x+y+z=1) and LiNiₓCo_{y}Al_{z}O₂ (NCA, where x+y+z=1), in which a portion of Co is substituted with other transition metals, have recently been used as cathode active materials for medium- and large-sized secondary batteries. These NCM and NCA cathode active materials are advantageous in that nickel-one of their raw materials-is relatively inexpensive, and they have high reversible capacity. In particular, from the viewpoint of achieving high capacity, attention has been drawn to NCM and NCA in which the molar ratio of Ni is 50 mol% or more. Generally, these Ni-based cathode active materials are prepared by mixing a transition metal compound precursor, synthesized via a co-precipitation method, with a lithium source, followed by solid-state synthesis. However, Ni-based cathode materials synthesized by this method are present in the form of secondary particles in which small primary particles are aggregated. During long-term charge/discharge cycles, micro-cracks may form inside these secondary particles. Such micro-cracks create new interfaces in the cathode active material and induce side reactions with the electrolyte, leading to battery performance degradation such as reduced stability from gas generation and electrolyte depletion. In addition, realizing high energy density requires increasing the electrode density (> 3.3 g/cc). However, this may induce collapse of the secondary particles, resulting in side reactions with the electrolyte, depletion of the electrolyte, and a rapid drop in the initial battery life. As a result, Ni-based cathode active materials prepared by a conventional co-precipitation method, which exist in the form of secondary particles, cannot achieve high energy density.

To address the aforementioned problem of Ni-based cathode active materials in secondary-particle form, recent research has focused on single-particle Ni-based cathode active materials. Single-crystal Ni-based cathode active materials may exhibit excellent electrochemical performance without the occurrence of particle collapse even when electrode density is increased (> 3.3 g/cc) to realize high energy density. However, these single-crystal Ni-based cathode active materials reportedly suffer from structural and/or thermal instability during electrochemical evaluation due to unstable Ni³⁺ and Ni⁴⁺ ions, thereby degrading battery stability.

Accordingly, there remains a need for cathode active materials that enable the development of lithium secondary batteries having both high energy density and long lifespan characteristics.

### Disclosure of Invention

### Technical Problem

The present disclosure is to provide a cathode active material that ensures high energy density and a long cycle life.

### Solution to Problem

According to an aspect, provided is a cathode active material including a lithium nickel-based transition metal oxide particle that includes 96 mol% or more of nickel and is free of manganese, and includes from 400 ppm to less than 1,000 ppm of titanium (Ti) substituted at transition metal sites within a crystal structure,
wherein the lithium nickel-based transition metal oxide particle includes a concentration gradient region in which respective concentrations of aluminum (Al) atoms and cobalt (Co) atoms each change from a surface of the particle to a center of the particle,
wherein, in the concentration gradient region, an absolute value (A) of a slope of the cobalt atom concentration change and an absolute value (B) of a slope of the aluminum atom concentration change satisfy A > B.

According to another aspect, provided is a method of preparing the cathode active material, the method including: mixing a nickel-containing precursor compound, a lithium-containing precursor compound, an M1-containing precursor compound, an M2-containing precursor compound, a sodium precursor compound, and an S-containing precursor compound, and then performing first sintering to obtain a lithium nickel-based transition metal oxide precursor compound; and
solid-state mixing the lithium nickel-based transition metal oxide precursor compound with a Co precursor compound and an Al precursor compound, and then performing second sintering to obtain a lithium nickel-based transition metal oxide particle,
wherein the lithium nickel-based transition metal oxide particle includes a concentration gradient region in which the concentrations of aluminum (Al) and cobalt (Co) atoms each change from a surface of the particle toward a center of the particle,
wherein, in the concentration gradient region, an absolute value (A) of a slope of the cobalt atom concentration change and an absolute value (B) of a slope of the aluminum atom concentration change satisfy A > B.

According to another aspect, provided is a lithium secondary battery including: a cathode including the aforementioned cathode active material;
an anode; and
an electrolyte.

### Advantageous Effects of Invention

A cathode active material according to an aspect includes 96mol% or more of nickel, does not contain manganese, has from 400ppm to less than 1,000ppm of titanium (Ti) substituted at the transition metal sites in the crystal structure, and includes a concentration gradient region in which cobalt (Co) and aluminum (Al) exhibit concentration gradients wherein, in this concentration gradient region, the absolute value (A) of the slope of the cobalt atom concentration change and the absolute value (B) of the slope of the aluminum atom concentration change satisfy A>B. As a result, the particles do not fracture even at high electrode densities, and by stabilizing Ni ions, the cathode active material can achieve higher volumetric capacity along with stable cycle performance.

### Brief Description of Drawings

FIG. 1 is an SEM image of cathode active materials obtained in Example 1 and Comparative Examples 1 to 7, according to an embodiment of the present disclosure.
FIG. 2 shows an HR-TEM analysis showing element distribution profiles from the surface to the center of a particle of a cathode active material obtained in Example 1, according to an embodiment of the present disclosure.
FIG. 3 shows an HR-TEM analysis showing element distribution profiles from the surface to the center of a cathode active material particle obtained in Comparative Example 1.
FIG. 4 is a schematic diagram of a lithium battery according to an embodiment.

### <List of Reference Numerals for Major Elements>

| | | | |
|---|---|---|---|
| 1: | LITHIUM BATTERY | 2: | ANODE |
| 3: | CATHODE | 4: | SEPARATOR |
| 5: | BATTERY CASE | 6: | CAP ASSEMBLY |

### Best Mode for Carrying out the Invention

### Mode for the Invention

The present inventive concept, which will be more fully described hereinafter, may have various variations and various embodiments, and specific embodiments will be illustrated in the accompanied drawings and described in greater detail. However, the present inventive concept should not be construed as being limited to specific embodiments set forth herein. Rather, these embodiments are to be understood as encompassing all variations, equivalents, or alternatives included in the scope of the present inventive concept.

The terminology used hereinbelow is used for the purpose of describing particular embodiments only, and is not intended to limit the present inventive concept.

As used herein, the singular forms are intended to include the plural forms as well, unless the context clearly indicates otherwise. As used herein, the terms "comprises" and/or "comprising," or "includes" and/or "including," or "has," unless otherwise indicated, indicate that certain features, numbers, steps, operations, components, parts, constituents, materials, or any combination thereof described in the specification are present, but do not preclude the presence or addition of one or more other features, numbers, steps, operations, components, parts, constituents, materials, or combinations thereof.

As used herein, "/" may be interpreted as "and", or as "or" depending on the context.

As used herein, the term "concentration gradient region" should be understood to refer to a region in which the concentration of atoms changes, whether linearly or nonlinearly.

As used herein, the term "concentration gradient slope" should be understood to refer to the amount of change in atomic concentration from an outer surface of the concentration gradient region toward the center of the particle.

In the drawings, thicknesses may be magnified or exaggerated to clearly illustrate various layers and regions. Like reference numbers may refer to like elements throughout the drawings and the following description. Throughout the specification, when a component, such as a layer, a film, a region, or a plate, is described as being "above" or "on" another component, the component may be directly above the other component, or there may be yet another component therebetween. Although the terms "first," "second," etc. may be used herein to describe various elements, these elements should not be limited by these terms. These terms are only used to distinguish one element from another element.

Unless otherwise defined, all terms (including technical terms and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the present specification and the relevant art and should not be interpreted in an idealized or overly formal sense unless expressly so defined herein.

While specific examples and are described herein, there may be alternatives, modifications, variations, improvements, and substantial equivalents of the examples disclosed herein, including those that are not presently unforeseen or unappreciated, may arise from applicants or those skilled in the art. Accordingly, the appended claims as filed and as they may be amended are intended to embrace all such alternatives, modifications, variations, improvements and substantial equivalents.

Hereinbelow, a cathode active material according to embodiments, a method of preparing the same, and a lithium secondary battery including a cathode including the same will be described in greater detail.

A cathode active material according to an aspect may include a lithium nickel-based transition metal oxide particle that includes 96 mol% or more of nickel, is free of manganese, and includes from 400 ppm to less than 1,000 ppm of titanium (Ti) substituted at transition metal sites within a crystal structure, wherein the lithium nickel-based transition metal oxide particle includes a concentration gradient region in which a concentration of aluminum (Al) atoms and a concentration of cobalt (Co) atoms each change from a surface of the particle toward a center of the particle, and wherein, in the concentration gradient region, an absolute value (A) of a slope of the cobalt atom concentration change and an absolute value (B) of a slope of the aluminum atom concentration change satisfy A > B.

According to an embodiment, the lithium nickel-based transition metal oxide particle may contain less than 2mol% of aluminum (Al) atoms. For example, the lithium nickel-based transition metal oxide particle may contain 1.5mol% or less, 1.0mol% or less, or 0.5mol% of aluminum atoms.

According to an embodiment, the lithium nickel-based transition metal oxide particle may contain 2.5mol% or less of cobalt (Co) atoms. For example, the lithium nickel-based transition metal oxide particle may contain from 1mol% to 2mol%, or from 1.5mol% to 2mol% of cobalt atoms.

According to an embodiment, the respective concentrations of aluminum atoms and cobalt atoms in the concentration gradient region may each decrease from an outer surface of the concentration gradient region toward the center of the particle.

According to an embodiment, in the concentration gradient region, the concentration of cobalt atoms may be higher than the concentration of aluminum atoms. As a result, the initial capacity reduction may be suppressed as much as possible, while the cycle characteristics are significantly improved.

By including this concentration gradient region, in which the respective concentrations of aluminum and cobalt atoms vary in a local portion of the particle, the lithium transition metal oxide particle according to an embodiment of the present disclosure may achieve higher capacity and improved cycle characteristics compared to a cathode active material having a concentration gradient throughout the entire particle. In addition, by ensuring that the cobalt atom concentration change in the concentration gradient region exceeds the aluminum atom concentration change, the particle can possess structural stability and enhanced conductivity during charging and discharging, thereby improving its cycle characteristics without reducing initial discharge efficiency or deteriorating high-power performance due to nickel dissolution. Furthermore, when the absolute values of the slopes for the cobalt and aluminum atom concentration changes both fall within the aforementioned range, it is possible to achieve improved cycle life while also suppressing any decline in output characteristics that might otherwise result from the increased lithium-ion resistance associated with a thicker concentration gradient region.

According to an embodiment, the nickel atom concentration in the concentration gradient region may increase from the surface of the particle toward the center of the particle. For example, within the concentration gradient region, the nickel atom concentration may decrease toward the surface of the particle in the concentration gradient region, and remain unchanged in regions other than the concentration gradient region.

According to an embodiment, the thickness of the concentration gradient region may be 0.6 or less of the radius of the particle. For example, the thickness of the concentration gradient region may be 0.5 or less, 0.4 or less, 0.3 or less, or 0.2 or less of the radius of the particle. When the thickness of the concentration gradient region falls within the aforementioned range, it does not act as a resistance layer for lithium-ion transport, and thus avoids any decline in output characteristics.

According to an embodiment, the concentration gradient region may have a thickness of 300 nm or less from the surface of the lithium nickel-based transition metal oxide particle toward the particle center. For example, the thickness of the concentration gradient region may be in a range of 50 nm to 300 nm, 100 nm to 250 nm, or 150 nm to 200 nm, measured from the surface of the lithium nickel-based transition metal oxide particle toward the particle center. When the thickness of the concentration gradient region falls within the aforementioned range, it does not act as a resistance layer for lithium-ion transport, and thus avoids any decline in output characteristics.

According to an embodiment, the lithium nickel-based transition metal oxide particle may further include sodium (Na) atoms and sulfur (S) atoms.

According to an embodiment, in the crystal of the lithium nickel-based transition metal oxide particle, some of the lithium (Li) atoms may be substituted with sodium (Na) atoms, and some of the oxygen (O) atoms may be substituted with sulfur (S) atoms.

When a portion of the lithium atoms is substituted with sodium atoms, the crystal structure remains stable even if lithium is extracted during charging. Moreover, since introducing sodium atoms increases the crystal volume and thereby enhances lithium mobility, the output characteristics may be improved. In addition, by substituting a portion of the oxygen atoms with sulfur (S) atoms, the bonding strength between the transition metals and sulfur increases, which in turn suppresses any structural transition in the lithium nickel-based oxide during charging and discharging of the lithium secondary battery, thereby enhancing the structural stability of the lithium nickel-based oxide. As a result, the cycle characteristics may be enhanced.

According to an embodiment, the total amount of the sodium (Na) and sulfur (S) atoms included in the lithium nickel-based transition metal oxide particle may be in a range of 300 ppm to 1,500 ppm. For example, the total amount of the sodium (Na) and sulfur (S) atoms included in the lithium nickel-based transition metal oxide particle may be in a range of 400 ppm to 1,500 ppm. For example, the total amount of the sodium (Na) and sulfur (S) atoms included in the lithium nickel-based transition metal oxide particle may be in a range of 500 ppm to 1,500 ppm. For example, the total amount of the sodium (Na) and sulfur (S) atoms included in the lithium nickel-based transition metal oxide particle may be in a range of 600 ppm to 1,500 ppm. For example, the total amount of the sodium (Na) and sulfur (S) atoms included in the lithium nickel-based transition metal oxide particle may be in a range of 700 ppm to 1,500 ppm. For example, the total amount of the sodium (Na) and sulfur (S) atoms included in the lithium nickel-based transition metal oxide particle may be in a range of 800 ppm to 1,500 ppm. For example, the total amount of the sodium (Na) and sulfur (S) atoms included in the lithium nickel-based transition metal oxide particle may be in a range of 900 ppm to 1,500 ppm. For example, the total amount of the sodium (Na) and sulfur (S) atoms included in the lithium nickel-based transition metal oxide particle may be in a range of 1,000 ppm to 1,500 ppm. For example, the total amount of the sodium (Na) and sulfur (S) atoms included in the lithium nickel-based transition metal oxide particle may be in a range of 1,100 ppm to 1,500 ppm. For example, the total amount of the sodium (Na) and sulfur (S) atoms included in the lithium nickel-based transition metal oxide particle may be in a range of 1,200 ppm to 1,500 ppm. For example, the total amount of the sodium (Na) and sulfur (S) atoms included in the lithium nickel-based transition metal oxide particle may be in a range of 1,000 ppm to 1,400 ppm. For example, the total amount of the sodium (Na) and sulfur (S) atoms may be in a range of 1,100 ppm to 1,400 ppm. For example, the total amount of the sodium (Na) and sulfur (S) atoms may be in a range of 1,200 ppm to 1,400 ppm. When the total amount of sodium (Na) and sulfur (S) atoms falls within the specified range, crystal collapse during the charge/discharge process can be prevented, which is expected to improve cycle life.

According to an embodiment, the amount of titanium (Ti) contained in the lithium nickel-based transition metal oxide particle may be in a range of 500ppm to 900ppm, or 500ppm to 800ppm.

According to an embodiment, the lithium nickel-based transition metal oxide particle may be a single particle or single crystal, or a secondary particle formed by the aggregation of a plurality of single particles.

For example, the lithium nickel-based transition metal oxide particle may be a single particle. A single particle is conceptually distinct from a secondary particle, which is formed by agglomerating a plurality of particles, or by agglomerating a plurality of particles followed by coating around the perimeter of the agglomerate. Because the lithium nickel-based transition metal oxide particle takes the form of the single particle, they can resist breakage even at high electrode densities. As a result, a cathode active material incorporating these lithium nickel-based transition metal oxide particles not only enables high energy density but also prevents particle breakage due to rolling during electrode fabrication, thereby achieving excellent cycle characteristics.

According to an embodiment, the lithium nickel-based transition metal oxide particle may have a single-crystal structure. A single crystal is conceptually distinct from a single particle. A single particle refers to a particle formed as one piece, regardless of the number or types of crystals in it, whereas a single crystal means the particle itself contains only one crystal. The lithium nickel-based transition metal oxide particle in single-crystal form not only exhibit very high structural stability but also allow easier lithium-ion conduction compared to polycrystalline materials, thereby providing superior fast-charging characteristics compared to polycrystalline active materials.

According to an embodiment, the lithium nickel-based transition metal oxide particle may be secondary particles formed by the aggregation of a plurality of single particles. Such secondary particles formed by aggregating a plurality of single particles may be composed of two or more single-crystal single particles. In this case, the ratio of these secondary particles included in the cathode active material may be less than 30 % of the total lithium nickel-based transition metal oxide particles. For example, the ratio of the secondary particles included in the cathode active material may be 29 % or less, 28 % or less, 27 % or less, 26 % or less, or 25 % or less, relative to the total lithium nickel-based transition metal oxide particles.

According to an embodiment, the lithium nickel-based transition metal oxide particle may be single crystals and single particles. By forming as single crystals and single particles, the lithium nickel-based transition metal oxide particle may exhibit structural stability and enable the fabrication of high-density electrodes, allowing a lithium secondary battery incorporating these particles to possess both enhanced cycle characteristics and high energy density.

According to an embodiment, the lithium nickel-based transition metal oxide particles may have an average particle diameter (D₅₀) of 0.1 µm to 20 µm. Here, the average particle diameter (D₅₀) refers to the particle diameter corresponding to 50 % of the cumulative distribution from smaller to larger particles, as determined by particle size distribution (PSD) analysis. For example, the average particle diameter (D₅₀) may be in a range of 0.5 µm to 20 µm, 1 µm to 20 µm, 2 µm to 19 µm, 3 µm to 18 µm, 4 µm to 17 µm, 5 µm to 16 µm, 6 µm to 15 µm, 7 µm to 14 µm, 8 µm to 13 µm, or 9 µm to 12 µm. When the average particle diameter falls within the aforementioned range, the desired volumetric energy density may be realized. If the average particle diameter exceeds 20 µm, there is a marked decrease in charge/discharge capacity, and if the average particle diameter is 1 µm or less, achieving the desired volumetric energy density becomes difficult.

According to an embodiment, the lithium nickel-based transition metal oxide particle may be represented by Formula 1:

[Formula 1] Li₁₋ₐNaₐNi_{1-x-y-α-β}CoₓAl_{y}M1_{α}M2_{β}O_{2-b}S_{b}

wherein in Formula 1,
M1 and M2 may be each independently at least one element selected from the group consisting of Zr, W, Ti, Sr, Ba, Ce, B, Mg, and Bi, and
the relations 0<a≤0.01, 0<α≤0.003, 0<β≤0.003, 0<x≤0.03, 0<y≤0.01, and 0<b≤0.01 may be satisfied.

According to an embodiment, M1 may be at least one element selected from the group consisting of Ti, Sr, Ba, Ce, and Bi. For example, M1 may be Ti.

According to an embodiment, M2 may be at least one element selected from the group consisting of Zr, W, B, and Mg. For example, M2 may be Zr.

According to an embodiment, M1 may be Ti, and M2 may be Zr.

According to an embodiment, a may satisfy 0<a≤0.005 or 0<a≤0.001.

According to an embodiment, b may satisfy 0<β≤0.005 or 0<β≤0.003.

According to an embodiment, α may satisfy 0<α≤0.002 or 0<α≤0.001.

According to an embodiment, β may satisfy 0<β≤0.002 or 0<β≤0.001.

According to an embodiment, α and β may be identical to each other.

According to an embodiment, x may satisfy 0<x≤0.025 or 0<x≤0.02.

According to an embodiment, y may satisfy 0<y≤0.009, 0<y≤0.008, 0<y≤0.007, 0<y≤0.006, or 0<y≤0.005.

According to an embodiment, the relations 0<x≤0.02 and 0<y≤0.005 may be satisfied.

According to an embodiment of the present disclosure, when the lithium nickel-based transition metal oxide particle satisfies Formula 1, it is possible to achieve improved cycle life without any decrease in capacity or output characteristics.

Hereinafter, a method of preparing a cathode active material according to an aspect will be described in detail.

The method of manufacturing a cathode active material according to one aspect may include: mixing a nickel-containing precursor compound, a lithium-containing precursor compound, an M1-containing precursor compound, and an M2-containing precursor compound, and then performing first sintering to obtain a lithium nickel-based transition metal oxide precursor compound; and
solid-state mixing the lithium nickel-based transition metal oxide precursor compound with a Co precursor compound and an Al precursor compound, and then performing second sintering to obtain lithium nickel-based transition metal oxide particles. At this time, the lithium nickel-based transition metal oxide particle may include a concentration gradient region in which the respective concentrations of aluminum (Al) and cobalt (Co) atoms each change from a surface of the particle to a center of the particle, and wherein, in the concentration gradient region, an absolute value (A) of a slope of the cobalt atom concentration change and an absolute value (B) of a slope of the aluminum atom concentration change may satisfy A > B.

For details related to the lithium nickel-based transition metal oxide particles, reference may be made to the foregoing description.

According to an embodiment, the nickel-containing precursor compound may be a compound capable of supplying nickel, including such as nickel hydroxide, nickel oxide, nickel nitride, nickel carbonate, or nickel acetate, or a combination thereof, but is not limited thereto. For example, the nickel-containing precursor compound may be NiO, Ni(OH)₂, NiCO₃, or a combination thereof. Furthermore, the nickel element-containing precursor compound may contain Na element in an amount of more than 0 ppm and 300 ppm or less, and S element in an amount of 300 ppm to 1,200 ppm. For example, the nickel element-containing precursor compound may contain Na element in an amount of 100 ppm to 300 ppm, and S element in an amount of 400 ppm to 1,200 ppm. For example, the nickel element-containing precursor compound may contain Na element in an amount of 100 ppm to 300 ppm, and S element in an amount of 600 ppm to 1,200 ppm. For example, the nickel element-containing precursor compound may contain Na element in an amount of 100 ppm to 300 ppm, and S element in an amount of 700 ppm to 1,200 ppm. For example, the nickel element-containing precursor compound may contain Na element in an amount of 100 ppm to 300 ppm, and S element in an amount of 800 ppm to 1,200 ppm. For example, the nickel element-containing precursor compound may contain Na element in an amount of 100 ppm to 300 ppm, and S element in an amount of 900 ppm to 1,200 ppm. For example, the nickel element-containing precursor compound may contain Na element in an amount of 100 ppm to 300 ppm, and S element in an amount of 1,000 ppm to 1,200 ppm.

According to an embodiment, the lithium element-containing precursor compound may include a hydroxide, oxide, nitride, or carbonate of lithium, or a combination thereof, but is not limited thereto. For example, the lithium-containing precursor compound may be LiOH·H₂O, Li₂CO₃, or a combination thereof.

According to an embodiment, the M1-containing precursor compound may include a hydroxide, oxide, nitride, or carbonate of one or more elements selected from the group consisting of Ti, Sr, Ba, Ce, and Bi, or a combination thereof, but is not limited thereto. For example, the M1-containing precursor compound may be TiO₂, Sr(OH)₂, BaO, Ce₂O₃, Bi(OH)₃, or a combination thereof.

According to an embodiment, the M2-containing precursor compound may include a hydroxide, oxide, nitride, or carbonate of one or more elements selected from the group consisting of Zr, W, B, and Mg, or a combination thereof, but is not limited thereto. For example, the M2-containing precursor compound may be ZrO₂, WO₃, B₂O₃, MgO, or a combination thereof.

According to an embodiment, the mixing may be performed by solid-state mixing, which includes mechanical mixing. The mechanical mixing is performed under dry conditions. The mechanical mixing involves applying mechanical force to pulverize and mix the materials to be combined, thereby forming a uniform mixture. Such mechanical mixing may be carried out using mixing devices such as a ball mill, a planetary mill, a stirred ball mill, or a vibrating mill, employing chemically inert beads. In this process, in order to maximize the mixing efficiency, small amounts of an alcohol (e.g., ethanol) or a volatile higher fatty acid (e.g., stearic acid) may optionally be added.

The mechanical mixing is conducted in an oxidizing atmosphere to prevent reduction of the transition metal source (e.g., a Ni compound), thereby ensuring the structural stability of the active material.

According to an embodiment, the first sintering and the second sintering are performed at different temperatures, with the temperature for the first sintering being higher than that for the second sintering. As a result, single-crystal, single-particle lithium nickel-based transition metal oxide precursor particles are obtained through the first sintering, and by carrying out the second sintering at a lower temperature than the first sintering, a concentration gradient region may be formed from the outer surface of the precursor particles without excessive crystal growth.

According to an embodiment, the first sintering may be carried out at a temperature of 700 °C to 800 °C, for a duration of 13 hours to 20 hours. For example, the first sintering may be carried out at a temperature of 710 °C to 790 °C, 720 °C to 780 °C, or 730 °C to 770 °C. For example, the first sintering may be carried out for a duration of 14 hours to 19 hours, or 15 hours to 18 hours.

According to an embodiment, the second sintering may be carried out at a temperature of 650 °C to 750 °C, for a duration of 8 hours to 12 hours. For example, the second sintering may be carried out at a temperature of 660 °C to 740 °C, 670 °C to 730 °C, 680 °C to 720 °C, or 690 °C to 710 °C. For example, the second sintering may be carried out for a duration of 8 hours to 11 hours, or 9 hours to 11 hours.

According to an embodiment, the first sintering may be performed at a temperature of 700 °C to 800 °C, and the second sintering may be performed at a temperature of 650 °C to 750 °C.

The lithium nickel-based transition metal oxide particles manufactured by the aforementioned method have a single-crystal, single-particle morphology and include a concentration gradient region of Co and Al at the surface, thereby providing a cathode active material with a stabilized form of otherwise unstable Ni ions (Ni(III) and Ni(IV)) and exhibiting a long cycle life.

According to another aspect, a cathode including the above-described cathode active material may be provided.

According to another aspect, a lithium secondary battery including the cathode; an anode; and an electrolyte, may be provided.

According to an embodiment, the electrolyte may be a liquid electrolyte, a semi-solid electrolyte, or a solid electrolyte. For details regarding the electrolyte, reference may be made to the description set forth below.

The cathode and the lithium secondary battery containing the cathode may be manufactured as follows.

First, the cathode may be prepared.

For example, a cathode active material composition may be prepared by mixing the aforementioned cathode active material with a conductive material, a binder, and a solvent. The cathode active material composition may be directly coated on a metal current collector to form a cathode plate. Alternatively, the cathode active material composition may be cast onto a separate support, and the film peeled off from the support may be laminated onto a metal current collector to form a cathode plate. The cathode is not limited to the forms described above and may be in other forms.

As the conductive material, graphite (e.g., natural graphite or artificial graphite), carbon black, conductive tubes such as carbon nanotubes, conductive whiskers such as fluorocarbon, zinc oxide, or potassium titanate, or conductive metal oxides such as titanium oxide may be used. However, the conductive material is not limited to these examples, and any material known in the art to function as a conductive agent may be employed.

As the binder, a vinylidene fluoride/hexafluoropropylene copolymer, polyvinylidene fluoride (PVDF), polyacrylonitrile, polymethyl methacrylate, polytetrafluoroethylene, a mixture thereof, a metal salt, or a styrene-butadiene rubber-based polymer may be used. However, the binder is not limited to these examples, and any material known in the art to function as a binder may be employed. Other examples of the binder may include a lithium salt, sodium salt, calcium salt, or Na salt of any one of the aforementioned polymers.

Examples of the solvent may include N-methyl-2-pyrrolidone, acetone, or water, although any solvent available in the art may be employed without limitation.

Each of the cathode active material, the conductive material, the binder, and the solvent may be used in an amount commonly used in a lithium battery. Depending on the application and configuration of the lithium battery, one or more of the conductive material, binder, and solvent may be omitted.

Next, the anode may be prepared.

For example, an anode active material composition may be prepared by mixing an anode active material, a conductive material, a binder, and a solvent. The anode active material composition may be directly coated and dried on a metal current collector having a thickness of 3 µm to 500 µm to form an anode plate. Alternatively, the anode active material composition may be cast onto a separate support, and the film peeled off from the support may be laminated onto a metal current collector to form an anode plate.

The anode current collector is not particularly limited as long as it has conductivity and does not induce a chemical change in the battery. For example, copper, nickel, or copper surface-treated with carbon may be used.

The anode active material may be any material that can be used as an anode active material for lithium batteries in the art. For example, the anode active material may include one or more selected from the group consisting of lithium metal, a metal alloyable with lithium, transition metal oxides, non-transition metal oxides, and carbon-based materials.

For example, the metal alloyable with lithium may be Si, Sn, Al, Ge, Pb, Bi, Sb, an Si-Y alloy (Y is an alkali metal, an alkaline earth metal, a Group 13 element, a Group 14 element, a transition metal, a rare-earth element, or a combination thereof, but is not Si), an Sn-Y alloy (Y is an alkali metal, an alkaline earth metal, a Group 13 element, a Group 14 element, a transition metal, a rare-earth element, or a combination thereof, but is not Sn), and the like. Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

For instance, the transition metal oxide may be lithium titanate, vanadium oxide, lithium vanadium oxide, or the like.

For example, the non-transition metal oxide may be SnO₂ or SiOₓ (0<x<2), or the like.

The carbon-based material may be crystalline carbon, amorphous carbon, or a mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and the like.

The same conductive material, binder, and solvent used for the cathode active material composition may also be employed in the anode active material composition.

Each of the anode active material, the conductive material, the binder, and the solvent may be used in an amount commonly used in a lithium battery. Depending on the application and configuration of the lithium battery, one or more of the conductive material, binder, and solvent may be omitted.

Next, a separator to be placed between the cathode and the anode may be prepared.

Any separator commonly used in lithium batteries may be used, without particular limitation. The separator may be selected to have low ionic resistance in the electrolyte and superior electrolyte retention properties. The separator may be a single-layer or multi-layer film, such as glass fiber, polyester, Teflon, polyethylene, polypropylene, polyvinylidene fluoride, or polytetrafluoroethylene (PTFE), or a combination thereof, and may be in either nonwoven or woven form. Further, mixed multi-layer films, such as a two-layer polyethylene/polypropylene separator, a three-layer polyethylene/polypropylene/polyethylene separator, or a three-layer polypropylene/polyethylene/polypropylene separator, may also be used. For example, a lithium-ion battery may utilize, for example, a rollable separator formed of polyethylene, polypropylene, or the like, and a lithium-ion polymer battery may utilize, for example, a separator capable of retaining a large quantity of organic electrolytes. For example, the separator may be prepared by the method described below.

A separator composition may be prepared by mixing a polymer resin, a filler, and a solvent. The separator composition may be coated and dried directly on top of the electrode, thereby forming the separator. Alternatively, after the separator composition is cast and dried on a support, the separator film peeled off from the support may be laminated onto the electrode, thereby forming the separator.

The polymer resin used to prepare the separator is not particularly limited and may be any of the materials used as binders for the electrode plate. For example, the polymer resin may utilize a vinylidene fluoride/hexafluoropropylene copolymer, polyvinylidene fluoride (PVDF), polyacrylonitrile, polymethyl methacrylate, or a mixture thereof.

Next, an electrolyte may be prepared.

For example, the electrolyte may be an organic electrolyte. In addition , the electrolyte may be solid. For example, the solid electrolyte may be boron oxide or lithium oxynitride, among others, without being limited thereto, and any material that can serve as a solid electrolyte in the art may be used. The solid electrolyte may be formed on the anode by a method such as sputtering.

For example, the organic electrolyte may be prepared by dissolving a lithium salt in an organic solvent.

For the organic solvent, any or all organic solvents available in the art may be utilized. For example, suitable organic solvents may include cyclic carbonates such as propylene carbonate, ethylene carbonate, fluoroethylene carbonate, butylene carbonate, and vinylene carbonate; chain-type carbonates such as dimethyl carbonate, diethyl carbonate, methyl ethyl carbonate, methyl propyl carbonate, ethyl propyl carbonate, methyl isopropyl carbonate, dipropyl carbonate, and dibutyl carbonate; esters such as methyl acetate, ethyl acetate, propyl acetate, methyl propionate, ethyl propionate, and γ-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide. Any one of the aforementioned organic solvents may be used singly or in combination. For example, a mixed solvent of a cyclic carbonate and a chain-type carbonate may be used.

Additionally, a gel polymer electrolyte formed by impregnating a polymer such as polyethylene oxide or polyacrylonitrile with an electrolyte solution, or an inorganic solid electrolyte such as Lil, Li₃N, LiₓGe_{y}P_{z}S_{α}, LiₓGe_{y}P_{z}S_{α}X_{δ} (where X is F, Cl, or Br) may also be employed.

For the lithium salt, any or all lithium salts available in the art may be utilized. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are natural numbers), LiCl, Lil, or a mixture thereof.

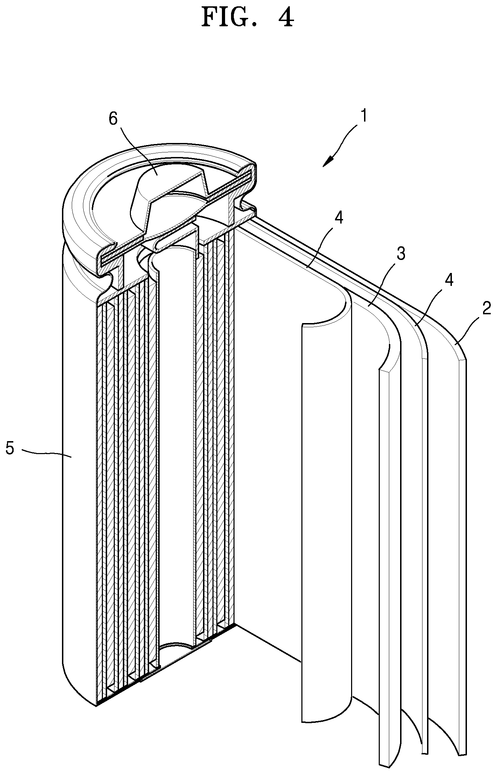

As shown in FIG.4, the lithium battery 1 may include a cathode 3, an anode 2, and a separator 4. The cathode 3, the anode 2, and the separator 4 described above may be wound or folded and placed in a battery case 5. The battery case 5 may be then filled with an organic electrolyte solution and sealed with a cap assembly 6, completing the lithium battery 1. The battery case 5 may take various forms, such as cylindrical, prismatic, pouch-type, coin-type, or thin-film. For example, the lithium battery 1 may be a thin-film battery. The lithium battery 1 may be a lithium-ion battery.

A separator may be placed between the cathode and the anode to form a battery structure. After layering the battery structure into a bi-cell configuration, it may be impregnated with an organic electrolyte solution. When the resultant product is placed in a pouch and sealed, a lithium-ion polymer battery is completed.

Additionally, multiple battery structures may be stacked to form a battery pack, which can be used in any device requiring high capacity and high output, such as laptops, smartphones, and electric vehicles. For example, the battery pack may be used in a laptop computer, a smartphone, an electric vehicle, and the like.

Furthermore, the lithium battery has excellent cycle characteristics and high-rate performance, and thus may be employed in electric vehicles (EVs). For example, the lithium battery may be used in hybrid vehicles such as plug-in hybrid electric vehicles (PHEVs). Also, the lithium battery may be used in areas where a large amount of electricity storage is required. For example, the lithium battery may be used in electric bicycles, power tools, and power storage systems.

The present disclosure is described in greater detail with reference to the following Preparation Examples, Examples, and Comparative Examples. However, the examples are provided only to illustrate the present disclosure, and the scope of the present disclosure is not limited thereto.

### (Preparation of Cathode Active Material)

### Example 1

A mixture was prepared by mechanically mixing, for about 15 minutes, 1,000 g of a Ni(OH)₂ precursor compound (containing 132ppm Na and 1,093ppm S in the precursor) with 462.7g of LiOH·H₂O, 2g of ZrO₂, and 1.09g of TiO₂. The mixed powder was then sintered at 760°C for 16hours to synthesize lithium transition metal oxide precursor particles. Subsequently, 500g of the resulting lithium transition metal oxide precursor particles were mechanically mixed with 10g of Co(OH)₂ and 2.5g of Al(OH)₃ for about 15 minutes, followed by sintering at 700°C for 10hours to obtain lithium transition metal oxide particles.

### Comparative Example 1

A mixture was prepared by mechanically mixing, for about 15 minutes, 1,000 g of a Ni(OH)₂ precursor compound (containing 135ppm Na and 1,060ppm S in the precursor) with 462.7g of LiOH·H₂O and 1.09 g of TiO₂. The mixed powder was then sintered at 760°C for 16hours to synthesize lithium transition metal oxide particles..

### Comparative Example 2

A mixture was prepared by mechanically mixing, for about 15 minutes, 1,000 g of a Ni(OH)₂ precursor compound (containing 133ppm Na and 1,130 ppm S in the precursor) with 462.7g of LiOH·H₂O and 2g of ZrO₂. The mixed powder was then sintered at 760°C for 16hours to synthesize lithium transition metal oxide particles.

### Comparative Example 3

A mixture was prepared by mechanically mixing, for about 15 minutes, 1,000 g of a Ni(OH)₂ precursor compound (containing 132ppm Na and 1,125ppm S in the precursor) with 462.7g of LiOH·H₂O, 2g of ZrO₂, and 1.09 g of TiO₂. The mixed powder was then sintered at 760 °C for 16 hours to synthesize lithium transition metal oxide particles.

### Comparative Example 4

A mixture was prepared by mechanically mixing, for about 15 minutes, 1,000 g of a Ni(OH)₂ precursor compound (containing 136ppm Na and 1,090 ppm S in the precursor) with 462.71g of LiOH·H₂O, 2g of ZrO₂, and 1.09 g of TiO₂. The mixed powder was then sintered at 760 °C for 16 hours to synthesize lithium transition metal oxide precursor particles. Subsequently, 500 g of the resulting lithium transition metal oxide precursor particles were mechanically mixed with 10 g of Co(OH)₂ for about 15 minutes, followed by sintering at 700 °C for 10hours to obtain lithium transition metal oxide particles.

### Comparative Example 5

A mixture was prepared by mechanically mixing, for about 15 minutes, 1,000 g of a Ni(OH)₂ precursor compound (containing 135ppm Na and 1,088 ppm S in the precursor) with 462.7g of LiOH·H₂O, 2g of ZrO₂, and 1.09 g of TiO₂. The mixed powder was then sintered at 760 °C for 16 hours to synthesize lithium transition metal oxide precursor particles. Subsequently, 500 g of the resulting lithium transition metal oxide precursor particles were mechanically mixed with 2.5g of Al(OH)₃ for about 15 minutes, followed by sintering at 700 °C for 10hours to obtain lithium transition metal oxide particles.

### Comparative Example 6

A mixture was prepared by mechanically mixing, for about 15 minutes, 1,000 g of a Ni(OH)₂ precursor compound (containing 132ppm Na and 1,103ppm S in the precursor) with 462.7g of LiOH·H₂O, 2g of ZrO₂, and 1.09 g of TiO₂. The mixed powder was then sintered at 760 °C for 16 hours to synthesize lithium transition metal oxide precursor particles. Subsequently, 500 g of the resulting lithium transition metal oxide precursor particles were mechanically mixed with 10 g of Co(OH)₂ and 10 g of Al(OH)₃ for about 15 minutes, followed by sintering at 700 °C for 10hours to obtain lithium transition metal oxide particles.

### Comparative Example 7

A mixture was prepared by mechanically mixing, for about 15 minutes, 1,000 g of a Ni(OH)₂ precursor compound (containing 129ppm Na and 1,020 ppm S in the precursor) with 462.7g of LiOH·H₂O, 2g of ZrO₂, and 1.09 g of TiO₂. The mixed powder was then sintered at 760 °C for 16 hours to synthesize lithium transition metal oxide precursor particles. Subsequently, 500 g of the resulting lithium transition metal oxide precursor particles were mechanically mixed with 2.5g of Co(OH)₂ and 10 g of Al(OH)₃ for about 15 minutes, followed by sintering at 700 °C for 10hours to obtain lithium transition metal oxide particles.

### (Preparation of Half-Cell)

### Example 2

A slurry was prepared by mixing the cathode active material obtained in Example 1, a conductive material, and a binder at a weight ratio of 96:2:2. Here, Super-P was used as the conductive material, and polyvinylidene fluoride (PVDF) dissolved in N-methyl-2-pyrrolidone solvent was used as the binder.

The slurry was uniformly coated onto an Al current collector and dried at 110 °C for 2 hours to prepare a cathode electrode. The electrode loading level was 11.0mg/cm², and the electrode density was 3.71g/cc.

Using the prepared cathode as the working electrode and lithium foil as the counter electrode, a CR2032 half-cell was fabricated according to a commonly known process, employing a liquid electrolyte prepared by mixing ethylene carbonate (EC) and diethyl carbonate (DEC) at a volume ratio of 3:7, adding 2wt% vinylene carbonate (VC), and then adding LiPF₆ as a lithium salt to a concentration of 1M.

### Comparative Examples 8 to 14

Half-cells were prepared in the same manner as in Example 2, except that the cathode active materials obtained in Comparative Examples 1 to 7 were used instead of the cathode active material obtained in Example 1.

**[Table 1]**

| | Composition |
|---|---|
| Comparative Example 1 | Li_{0.9995}Na_{0.0005}Ni_{0.999}Ti_{0.001}O_{1.997}S_{0.003} |
| Comparative Example 2 | Li_{0.9995}Na_{0.0005}Ni_{0.999}Zr_{0.001}O_{1.997}S_{0.003} |
| Comparative Example 3 | Li_{0.9995}Na_{0.0005}Ni_{0.998}Zr_{0.001}Ti_{0.001}O_{1.997}S_{0.003} |
| Comparative Example 4 | Li_{0.9995}Na_{0.0005}Ni_{0.9787}Co_{0.0193}Zr_{0.001}Ti_{0.001}O_{1.997}S_{0.003} |
| Comparative Example 5 | Li_{0.9995}Na_{0.0005}Ni_{0.9954}Al_{0.0026}Zr_{0.001}Ti_{0.001}O_{1.997}S_{0.003} |
| Comparative Example 6 | Li_{0.9995}Na_{0.0005}Ni_{0.952}Co_{0.0026}Al_{0.0026}Zr_{0.001}Ti_{0.001}O_{1.997}S_{0.003} |
| Comparative Example 7 | Li_{0.9995}Na_{0.0005}Ni_{0.9746}Co_{0.0024}Al_{0.0026}Zr_{0.001}Ti_{0.001}O_{1.997}S_{0.003} |
| Example 1 | Li_{0.9995}Na_{0.0005}Ni_{0.9761}Co_{0.0193}Al_{0.0026}Zr_{0.001}Ti_{0.001}O_{1.997}S_{0.003} |

### Evaluation Example 1: Composition Evaluation of Cathode Active Material

Inductively coupled plasma (ICP) analysis was performed on the cathode active materials synthesized in Example 1 and Comparative Examples 1 to 7 using a 700-ES (Varian) instrument, and the results are shown in Table 2.

Referring to Table 2, based on the ICP analysis results for Example 1 and Comparative Examples 1 to 7, it may be seen that introducing Co and Al concentration gradient layers onto the surface of the single-particle Ni-based cathode active material leads to partial substitution of other transition metals in the active material. Consequently, the content of Co and Al in the active material increases, while the moles of the other transition metals decrease. Even if the ICP analysis is conducted under vacuum, it is difficult to accurately determine the stoichiometric value of oxygen in the material because trace amounts of atmospheric oxygen and carbon dioxide may still enter during analysis.

**[Table 2]**

| | Ni (mol. %) | Co (mol.%) | Al (mol. %) | Na (ppm) | S (ppm) | Ti (mol.%, ppm) | Zr (mol.%) |
|---|---|---|---|---|---|---|---|
| Comparative Example 1 | 100 | 0 | 0 | 135 | 1,060 | 0.1, 499 | 0 |
| Comparative Example 2 | 100 | 0 | 0 | 133 | 1,130 | 0 | 0.1 |
| Comparative Example 3 | 100 | 0 | 0 | 132 | 1,125 | 0.1, 486 | 0.1 |
| Comparative Example 4 | 97.87 | 1.93 | 0 | 136 | 1,090 | 0.1, 490 | 0.1 |
| Comparative Example 5 | 99.32 | 0 | 0.26 | 135 | 1,088 | 0.1, 510 | 0.1 |
| Comparative Example 6 | 95.20 | 2.6 | 2.0 | 130 | 1,103 | 0.1, 520 | 0.1 |
| Comparative Example 7 | 97.46 | 0.24 | 2.1 | 129 | 1,020 | 0.1, 508 | 0.1 |
| Example 1 | 97.61 | 1.93 | 0.26 | 132 | 1,093 | 0.1, 510 | 0.1 |
| | | | | | | | |

### Evaluation Example 2: Appearance of the Cathode Active Material

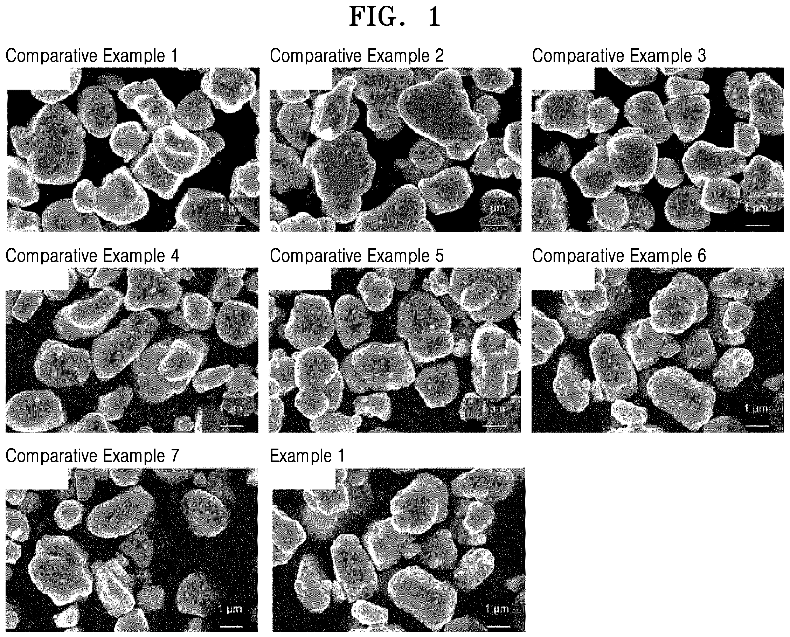

Scanning electron microscopy (SEM) images were taken for Example 1 and Comparative Examples 1 to 7 and are shown in FIG. 1. Referring to FIG. 1, it was confirmed that in Comparative Examples 1 to 3, the particle sizes were all similar regardless of the type of dopant, and upon applying a Co or Al coating, a concentration gradient region was formed on the surface of the cathode material.

### Evaluation Example 3: Evaluation of the Concentration Gradient Region of the Cathode Active Material

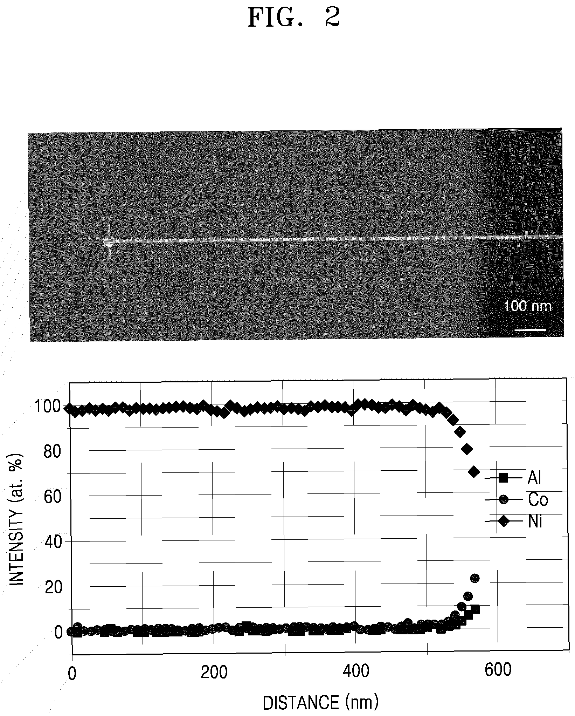

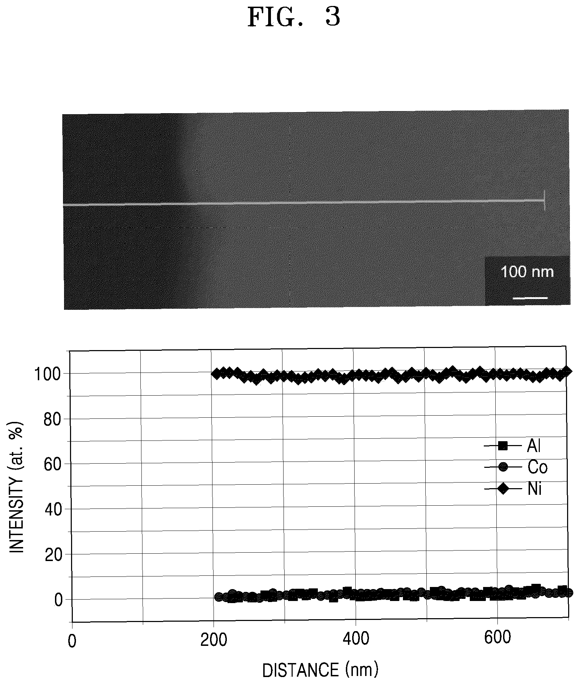

High-resolution transmission electron microscopy (HR-TEM) images were taken and energy-dispersive X-ray spectroscopy (EDX) analysis was performed for the cathode active materials obtained in Example 1 and Comparative Example 1. The results are shown in FIG. 2 (Example 1) and FIG. 3 (Comparative Example 1).

Referring to FIGS. 2 and 3, in Comparative Example 1, the concentration of transition metals on the surface of the active material is uniform. In contrast, in Example 1, the concentrations of cobalt and aluminum decrease from the surface toward the interior of the active material, while the nickel concentration increases from the surface toward the interior. Furthermore, as shown in FIG. 2, in the lithium transition metal oxide particles of Example 1, the rate of change in the cobalt ion concentration within the concentration gradient region is steeper than that of the aluminum ion concentration. Although the present disclosure is not bound by theory, this result is believed to occur because a relatively larger amount of Co coating material was used than Al coating material during the synthesis in Example 1. If the amount of Al coating material is equal to or greater than that of Co coating material, the initial capacity of the cathode material may decrease, leading to a drop in energy density. Among transition metals, cobalt and aluminum ions are known to contribute to the structural stability of layered cathode active materials compared to nickel ions. Thus, a cathode active material containing an excess of cobalt-which is relatively stable-on the surface is expected to have a positive effect on electrochemical performance.

### Evaluation Example 4: High-Temperature Cycle Life Test

The half-cells prepared in Example 2 and Comparative Examples 8 to 14 were allowed to rest for 10 hours. Afterward, the cells were charged to 4.3V in CC mode at 0.1 C, and then further charged in CV mode until the current dropped to 0.05 C. Next, the cells were discharged to 3.0V in CC mode at 0.1 C to complete the formation process.

Subsequently, at a high temperature (45°C), the cells were charged to 4.3V in CC mode at 0.5 C, and then further charged in CV mode until the current reached 0.05 C. The cells were then discharged to 3.0V in CC mode at 1C. This cycle was repeated 50 times.

The initial charge capacity and initial discharge capacity were measured, and based on these values, the initial efficiency was calculated. After 50 charge-discharge cycles, the capacity retention relative to the initial discharge capacity was determined and is shown in Table 3.

**[Table 3]**

| | Initial charge capacity (mAh/g) | Initial discharge capacity (mAh/g) | Initial efficiency (%) | Capacity retention (%) after 50 cycles |
|---|---|---|---|---|
| Comparative Example 8 | 252.1 | 219.5 | 87.1 | 85.1 |
| Comparative Example 9 | 252.4 | 220.1 | 87.2 | 87.3 |
| Comparative Example 10 | 251.9 | 220.3 | 87.4 | 89.4 |
| Comparative Example 11 | 251.0 | 221.4 | 88.2 | 91.2 |
| Comparative Example 12 | 252.1 | 219.2 | 86.9 | 90.8 |
| Comparative Example 13 | 249.1 | 216.6 | 87.0 | 91.0 |
| Comparative Example 14 | 251.0 | 218.6 | 87.1 | 91.3 |
| Example 2 | 250.9 | 220.4 | 87.8 | 93.5 |

Referring to Comparative Examples 8 to 10, there was no difference in the initial capacity of the cathode materials depending on the type of dopant used. Next, upon examining the effect of introducing the concentration gradient layer, it was found that Comparative Example 11, which introduced a Co concentration gradient layer, exhibited an improvement in initial discharge capacity and initial efficiency; however, Comparative Example 12, which introduced an Al concentration gradient layer, showed a decrease in both initial discharge capacity and initial efficiency. Furthermore, Comparative Example 13, which used a cathode active material prepared by adding Co and Al in equal amounts, showed a decrease in initial discharge capacity; and Comparative Example 14, which used the cathode active material prepared by adding Al in a higher amount than Co, showed insufficient capacity retention.

On the other hand, Example 2, which used a cathode active material that contains both Co and Al in the concentration gradient layer where both elements have a concentration gradient, showed a slight decrease in the initial discharge capacity and initial efficiency compared to the Co-only gradient sample; however, in terms of the cycle life at 45°C, Example 2 showed a remarkable improvement compared to the Co-only gradient sample (Comparative Example 11), the Al-only gradient sample (Comparative Example 12), the sample with equal amounts of Co and Al (Comparative Example 13), and the sample with a higher Al content than Co (Comparative Example 14).

This improvement in cycle-life characteristics is believed to result from the concentrations of Co and Al and the pronounced effect of their respective concentration gradients.

While preferred embodiments according to the present disclosure have been described with reference to the drawings and examples, these are merely illustrative, and those skilled in the art would understand that various modifications and other equivalent embodiments are possible. Therefore, the scope of protection of the present disclosure should be determined by the appended claims.

## Claims

1. A cathode active material comprising:
a lithium nickel-based transition metal oxide particle that includes 96 mol% or more of nickel, is free of manganese, and comprises from 400 ppm to less than 1,000 ppm of titanium (Ti) substituted at transition metal sites within a crystal structure,
wherein the lithium nickel-based transition metal oxide particle includes a concentration gradient region in which a concentration of aluminum (Al) atoms and a concentration of cobalt (Co) atoms each change from a surface of the particle toward a center of the particle, and
wherein, in the concentration gradient region, an absolute value (A) of a slope of a cobalt atom concentration change and an absolute value (B) of a slope of an aluminum atom concentration change satisfy A > B.

2. The cathode active material of claim 1,
wherein, in the concentration gradient region, the concentration of aluminum (Al) atoms and the concentration of cobalt (Co) atoms each decrease from an outer surface of the concentration gradient region toward the center of the particle.

3. The cathode active material of claim 1,
wherein, in the concentration gradient region, the concentration of cobalt atoms is higher than the concentration of aluminum atoms.

4. The cathode active material of claim 1,
wherein the lithium nickel-based transition metal oxide particle further comprise sodium (Na) atoms and sulfur (S) atoms.

5. The cathode active material of claim 4,
wherein a total amount of the sodium (Na) atoms and the sulfur (S) atoms contained in the lithium nickel-based transition metal oxide particle is in a range of 300 ppm to 1,500 ppm.

6. The cathode active material of claim 4,
wherein in the crystal of the lithium nickel-based transition metal oxide particle, a portion of lithium (Li) atoms is substituted with sodium (Na) atoms, and a portion of oxygen (O) atoms is substituted with sulfur (S) atoms.

7. The cathode active material of claim 1,
wherein, in the concentration gradient region, a concentration of nickel atoms increases from the surface of the particle to the center of the particle.

8. The cathode active material of claim 1,
wherein the concentration gradient region has a thickness of 0.6 or less times a radius of the particle.

9. The cathode active material of claim 1,
wherein the concentration gradient region has a thickness of 300nm or less from a surface of the lithium nickel-based transition metal oxide particle toward a center thereof.

10. The cathode active material of claim 1,
wherein the lithium nickel-based transition metal oxide particle is a single particle or single crystal, or is a secondary particle formed by agglomeration of a plurality of single particles.

11. The cathode active material of claim 11,
wherein, in the secondary particle formed by agglomeration of a plurality of single particles, a cobalt coating layer is present on the surface of the secondary particle.

12. The cathode active material of claim 1,
wherein the lithium nickel-based transition metal oxide particle has an average particle diameter of 0.1 µm to 20 µm.

13. The cathode active material of claim 1,
wherein the lithium nickel-based transition metal oxide particle is represented by Formula 1:
[Formula 1] Li₁₋ₐNaₐNi_{1-x-y-α-β}COₓAl_{y}M1_{α}M2_{β}O_{2-b}S_{b}
wherein, in Formula 1,
M1 and M2 are each independently at least one element selected from the group consisting of Zr, W, Ti, Sr, Ba, Ce, B, Mg, and Bi, and
0<a≤0.01, 0<α≤0.003, 0<β≤0.003, 0<x≤0.03, 0<y≤0.01, and 0<b≤0.01.

14. The cathode active material of claim 13,
wherein M1 is Ti and M2 is Zr.

15. The cathode active material of claim 1,
wherein 0<x≤0.02 and 0<y≤0.005.

16. A method of preparing a cathode active material, the method comprising:
mixing a nickel-containing precursor compound, a lithium-containing precursor compound, an M1-containing precursor compound, an M2-containing precursor compound, and then performing first sintering to obtain a lithium nickel-based transition metal oxide precursor compound; and
solid-state mixing the lithium nickel-based transition metal oxide precursor compound with a Co precursor compound and an Al precursor compound, and then performing second sintering to obtain a lithium nickel-based transition metal oxide particle,
wherein the lithium nickel-based transition metal oxide particle includes a concentration gradient region in which a concentration of aluminum (Al) atoms and a concentration of cobalt (Co) atoms each change from a surface of the particle toward a center of the particle,
wherein, in the concentration gradient region, an absolute value (A) of a slope of a cobalt atom concentration change and an absolute value (B) of a slope of an aluminum atom concentration change satisfy A > B.

17. The method of claim 16,
wherein a temperature for the first sintering is higher than a temperature for the second sintering.

18. The method of claim 16,
wherein the first sintering is performed at a temperature of 700 °C to 800 °C, and the second sintering is performed at a temperature of 650 °C to 750 °C.

19. A lithium secondary battery comprising:
a cathode comprising the cathode active material according to any one of claims 1 to 15;
an anode; and
an electrolyte.

20. The lithium secondary battery of claim 19,
wherein the electrolyte is a liquid electrolyte, a semi-solid electrolyte, or a solid electrolyte.
